# EUROPÄISCHE PATENTSCHRIFT

(11) **EP 4 417 406 B1**
(45) Veröffentlichungstag und Bekanntmachung des Hinweises auf die Patenterteilung: **10.12.2025**
(21) Anmeldenummer: 24152010.5
(22) Anmeldetag: 16.01.2024
(51) Int. Cl.: B29D 30/06, B29D 30/72

(54) **REIFENHEIZFORM**
TIRE HEATING MOLD
MOULE DE CHAUFFAGE DE PNEU

(30) Priorität: 16.02.2023 DE 102023201343
(43) Veröffentlichungstag der Anmeldung: 21.08.2024
(73) Patentinhaber: Continental Reifen Deutschland GmbH, 30175 Hannover (DE)
(72) Erfinder: Wüst, Alexander, 30175 Hannover (DE); Rother, Helge, 30175 Hannover (DE)
(74) Vertreter: Continental Corporation

(56) Entgegenhaltungen:
- WO-A1-2009/116987
- JP-A- 2015 112 913
- US-A1- 2007 077 320

## Beschreibung

Die Erfindung betrifft eine Reifenheizform zum Vulkanisieren eines Luftreifens, wobei der Luftreifen einen Laufstreifen mit Seitenflächen und einer Lauffläche aufweist, wobei die Reifenheizform Profilsegmente zum Ausprägen von radialen Vertiefungen im Laufstreifen und Seitenwandformen aufweist. Weiterhin betrifft die Erfindung eine Heizpresse sowie ein Verfahren zum Vulkanisieren eines Luftreifens mit einer Heizpresse und einen Luftreifen.

Die Geometrie von Laufstreifen von Luftreifen beeinflusst eine Vielzahl von Eigenschaften des Luftreifens, insbesondere die Haftung, den Rollwiderstand und die Geräuschemissionen. Um die teilweise gegenläufigen Anforderungen besser zu erfüllen, sind zur Luftreifenrotationsachse achsparallele oder zur Umfangsfläche des Luftreifens parallele Vertiefungen im Laufstreifen bekannt. Die bekannten Vertiefungen führen bei Ihrer Erzeugung zu Nahtzonen, die zur radial äußeren Oberfläche des Laufstreifens reichen und somit eine Schwachstelle darstellen. Andere Vorrichtungen zur Herstellung achsparallele Vertiefungen sind sehr kostenintensiv und anfällig im Betrieb beziehungsweise wartungsaufwendig.

Die DE 60 214 915 T2 offenbart eine Reifenvulkanisationsform, die radiale und axiale Aussparungen in Laufflächen von Luftreifen erzeugt. Die axialen Aussparungen werden durch vorspringende Bauteile erzeugt, die von zwischen einer offenen und einer geschlossenen Konfiguration verfahrbaren Schultersektoren getragen werden. Der Luftreifen wird in eine offene Konfiguration der Reifenvulkanisationsform in diese eingelegt, worauf die Reifenvulkanisationsform geschlossen wird und die vorspringenden Bauteile in radialer Richtung in den Luftreifen verfahren werden. Die Lauffläche umfließt die vorspringenden Bauteile und verbindet sich danach unter Ausbildung einer Nahtzone wieder miteinander.

Es ist weiterhin durch die DE 60 2005 000 902 T2, die sich ebenfalls mit Reifenvulkanisationsformen befasst, bekannt, dass Nahtzonen eine Schwachstelle darstellen können, wobei diese Druckschrift diesen Nachteil zu überwinden versucht, indem durch die Geometrie des vorspringenden Bauteils ein verlängerte Nahtzone erzeugt wird.

Weiterhin ist aus der US 2007/077320 A1 eine Reifenvulkanisationsform bekannt, die beim Einformen des Reifens mittels Bolzens Vertiefungen erzeugen, wobei Nahtzonen verringert werden.

Vor diesem Hintergrund liegt der Erfindung die Aufgabe zugrunde, eine Vorrichtung der eingangs genannten Art und ein Verfahren bereitzustellen, dass die vorgenannten Nachteile überwindet, indem sie eine kostengünstige, zuverlässige und wartungsarme Reifenheizform bereitstellt, zum Ausprägen von im Wesentlichen parallel zur Lauffläche verlaufenden Vertiefungen in Seitenflächen, wobei die Reifenheizform keine Nahtzone erzeugt, die bis zur radial äußeren Oberfläche des Laufstreifens reicht, wobei bevorzugt keine Nahtzone erzeugt wird.

Diese Aufgabe wird gelöst mit einer Reifenheizform gemäß den Merkmalen des Patentanspruches 1 sowie einer Heizpresse und einem Verfahren zum Vulkanisieren eines Luftreifens mit einer Heizpresse sowie einem Luftreifen gemäß den nebengeordneten Ansprüchen. Die Unteransprüche betreffen besonders zweckmäßige Weiterbildungen der Erfindung.

Erfindungsgemäß ist also eine Reifenheizform zum Vulkanisieren eines Luftreifens vorgesehen, wobei der Luftreifen einen Laufstreifen mit Seitenflächen und einer Lauffläche aufweist, wobei die Reifenheizform Profilsegmente zum Ausprägen von radialen Vertiefungen im Laufstreifen und Seitenwandformen aufweist. Zumindest an einer Seitenwandform an einer den Luftreifen ausbildenden Fläche ist ein Bolzen ausgebildet, der von der zumindest einen Seitenwandform abragt, zum Ausprägen von im Wesentlichen parallel zur Lauffläche verlaufenden Vertiefungen in der Seitenfläche beim Einsetzen des Luftreifens in die Reifenheizform. Ein Querschnitt des Bolzens weist eine elliptische, eine dreieckförmige oder eine wassertropfenförmige Geometrie auf.

Im Sinne dieser Erfindung werden unter radialen Vertiefungen im Laufstreifen, Vertiefungen verstanden, die in radialer Richtung des Luftreifens ausgeprägt sind und beispielweise Umfangsrillen ausbilden. Unter im Wesentlichen parallel zur Lauffläche verlaufenden Vertiefungen werden Vertiefungen verstanden deren Haupterstreckungsachse parallel zur Lauffläche verlaufen, wobei der Abstand der Vertiefung zur Laufflächenoberfläche an jeder Position der Vertiefung näherungsweise gleich groß ist.

Eine Reifenheizform mit einer erfindungsgemäßen Seitenwandform ermöglicht es Aussparungen in den Seitenflächen von Luftreifen zu erzeugen, wobei Nahtzonen im Laufstreifen, die durch das Umfließen eines Bolzens entstehen, verringert oder vermieden werden, wobei zumindest Nahtzonen im Bereich der radial äußeren Oberfläche des Laufstreifens vermieden werden.

Eine bevorzugte Ausführungsform sieht vor, dass der Bolzen in die Seitenwandform, bevorzugt manuell, einlegbar ist, wobei der Bolzen und die Seitenwandform jeweils eine Kontaktfläche zum miteinander in mechanischen Kontakt treten, aufweisen. Ein einlegbarer Bolzen ermöglicht es in einfacher Form den Luftreifen nach dem Vulkanisationsprozess mit dem Bolzen von der Seitenwand zu entfernen und den Bolzen nachfolgend zu entfernen. Ein Entformen des Luftreifens von der Seitenwand wird hierdurch vereinfacht. Als besonders einfach zu realisieren hat sich ein manuell einlegbarer Bolzen erwiesen.

Eine weitere bevorzugte Ausführungsform sieht vor, dass der Bolzen an der Seitenwandform dauerhaft befestigt ist, bevorzugt verfahrbar, insbesondere passiv verfahrbar, gelagert ist. Ein dauerhaft befestigter Bolzen an der Seitenwand erübrigt ein Einlegen des Bolzens in die Seitenwand. Ein einfaches Entformen des Luftreifens von der Seitenwand, was insbesondere bei Bolzen relevant ist, die weit von der Seitenwand abragen, wird durch ein Verfahren der Bolzen aus den Luftreifen heraus, bei oder vor dem Entformen des Luftreifens von der Seitenwand, ermöglicht. Eine besonders einfache Realisierung ist durch ein passives Verfahren der Bolzen möglich, so dass die Bolzen keinen Aktuator benötigen, sondern durch ein Verfahren an der Reifenheizform mitverfahren werden.

Eine weitere bevorzugte Ausführungsform sieht vor, dass der Bolzen ein hochfestes Material aufweist, insbesondere eine Eisenlegierung oder eine Aluminiumlegierung. Hochfeste Materialien haben sich als besonders geeignet erwiesen, da sie insbesondere auch den Entformungskräften standhalten, wenn die Bolzen weit von der Seitenwandform abragen.

Eine weitere bevorzugte Ausführungsform sieht vor, dass der Bolzen zumindest in Teilbereichen eine haftungsverringernde und beziehungsweise oder reibungsverringernde Beschichtung aufweist, insbesondere eine Polytetrafluorethylen-Beschichtung. Es hat sich gezeigt, dass eine haftungsverringernde oder reibungsverringernde Beschichtung die Entformungskräfte, die auf den Bolzen wirken, verringert. Insbesondere eine Polytetrafluorethylen-Beschichtung hat sich als beständig gegenüber den vorherrschenden Temperaturen und Kräften erwiesen, wobei sie effektiv die Entformungskräfte verringert.

Eine weitere bevorzugte Ausführungsform sieht vor, dass die Länge des Bolzens, also die Strecke um die der Bolzen von der Seitenwandform abragt, über 10 %, bevorzugt über 20 %, weiter bevorzugt über 40 % und am meisten bevorzugt über 80 % der Höhe der Reifenheizform beträgt. Die Höhe der Reifenheizform entspricht hierbei der Breite des Laufstreifens des herzustellenden Luftreifens. Eine große Länge des Bolzens ermöglicht es mittig so wie auch über die Mitte hinaus Vertiefungen im Luftreifen vorzusehen.

Eine weitere bevorzugte Ausführungsform sieht vor, dass eine Mittelachse des Bolzens bevorzugt eine Erstreckungskomponente in Umfangsrichtung aufweist. Eine derartige Ausrichtung des Bolzens ermöglicht es Vertiefungen zu erzeugen, die eine Ausrichtung auch in Umfangsrichtung aufweisen.

Die Erfindung sieht vor, dass ein Querschnitt des Bolzens eine elliptische, eine dreieckförmige oder eine wassertropfenförmige Geometrie aufweist. Die genannten Querschnittsgeometrien haben sich sowohl beim Herstellprozess des Luftreifens als auch in ihrem Ergebnis als Vertiefung im Luftreifen als besonders geeignet erwiesen.

Eine weitere bevorzugte Ausführungsform sieht vor, dass der Bolzen entlang seiner Haupterstreckungsachse eine bogenförmige Geometrie und beziehungsweise oder eine konische Geometrie aufweist. Eine bogenförmige Geometrie hat sich als geeignet erwiesen, um einen besonders konstanten Abstand der Aussparung zur Lauffläche auszubilden. Eine konische Geometrie hat sich als vorteilhaft erwiesen zum Verringern der Entformungskräfte.

Erfindungsgemäß ist eine Heizpresse aufweisend ein Heizpressen-Oberteil und ein Heizpressen-Unterteil sowie einen Container vorgesehen, wobei der Container eine erfindungsgemäße Reifenheizform aufweist.

Eine Heizpresse mit einer erfindungsgemäßen Seitenwandform ermöglicht es Aussparungen in den Seitenflächen von Luftreifen zu erzeugen, wobei Nahtzonen im Laufstreifen, die durch das Umfließen eines Bolzens entstehen, verringert oder vermieden werden, wobei zumindest Nahtzonen im Bereich der radial äußeren Oberfläche des Laufstreifens vermieden werden.

Erfindungsgemäß ist ein Verfahren zum Vulkanisieren eines Luftreifens mit einer Heizpresse, insbesondere einer erfindungsgemäßen Heizpresse mit den folgenden Schritten vorgesehen:
a) Beladen der geöffneten Heizpresse durch Einlegen eines zu vulkanisierenden Luftreifens, wobei durch die Bewegung des Luftreifens ein Teilbereich eines Bolzens in einen Laufstreifen des Luftreifens eindringt,
b) Konformieren des Luftreifens und Zusammenfahren von Profilsegmenten in radialer Richtung des Luftreifens,
c) Vulkanisieren des Luftreifens,
d) Öffnen der Heizpresse, Entladen des Luftreifens und Entfernen des Bolzens.

Das erfindungsgemäße Verfahren ermöglicht es Luftreifen mit Aussparungen in den Seitenflächen zu erzeugen, wobei Nahtzonen im Laufstreifen, die durch das Umfließen eines Bolzens entstehen, verringert oder vermieden werden, wobei zumindest Nahtzonen im Bereich der radial äußeren Oberfläche des Laufstreifens vermieden werden.

Erfindungsgemäß ist ein Luftreifen mit einem Laufstreifen aufweisend Seitenflächen und eine Lauffläche vorgesehen, wobei die Seitenflächen mit überwiegend konstantem Abstand zur Laufflächenoberfläche verlaufende Vertiefung aufweisen, hergestellt mit einem erfindungsgemäßen Verfahren. Der erfindungsgemäße Luftreifen weist Vertiefungen in der Seitenfläche auf, wobei Nahtzonen vermieden werden.

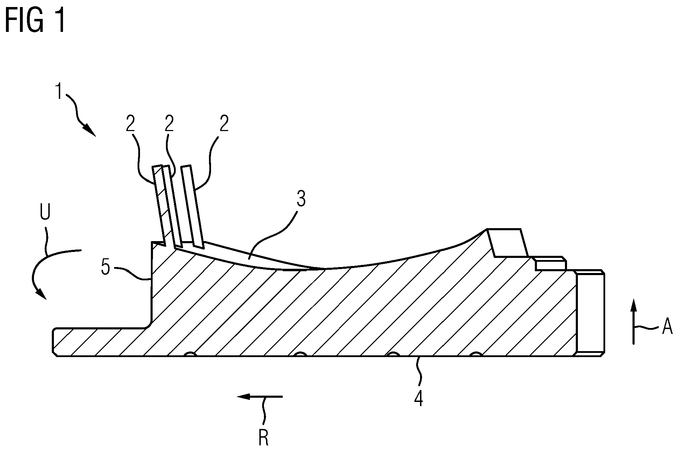

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 einen Teilbereich einer Seitenwandform mit Bolzen in einem Querschnitt.

Figur 1 zeigt einen Teilbereich einer Seitenwandform 1 mit Bolzen 2 einer Reifenheizform zum Vulkanisieren eines Luftreifens in einem Querschnitt. Die Seitenwandform 1 hat eine den Luftreifen ausbildende Fläche 3, die während des Vulkanisationsprozesses dem Luftreifen die Geometrie der Seitenwand einprägt.

Von der Fläche 3 ragen die Bolzen 2 ab, die unbeweglich zur Seitenwandform 1 gelagert sind. Die Bolzen 2 erstrecken sich überwiegend in axialer Richtung A des herzustellenden Luftreifens. Die Erstreckung der Bolzen 2 weist jedoch auch eine radiale Richtung R auf, so dass die Bolzen 2 Vertiefungen in dem Luftreifen einprägen, die parallel zur Lauffläche des Luftreifens verlaufen. Dazu weisen die Bolzen 2 weiterhin einen Krümmungsradius auf, der dem Krümmungsradius der Lauffläche des unvulkanisierten Luftreifens in axialer Richtung entspricht. Die Erstreckung der Bolzen 2 hat weiterhin eine Ausrichtung in Umfangsrichtung U, zum Ausprägen von Vertiefungen, die nicht genau in axialer Richtung des Luftreifens verlaufen.

Die Seitenwandform 1 weiterhin eine Auflagefläche 4, auf der sie in der Reifenheizform gelagert wird. Die Seitenwandform 1 hat Kontaktbereiche 5, mit der sie mit den Profilsegmenten während des Vulkanisationsprozesses in Kontakt steht.

### Bezugszeichenliste

- 1: Seitenwandform
- 2: Bolzen
- 3: Fläche
- 4: Auflagefläche
- 5: Kontaktbereiche

- A: axiale Richtung
- R: radiale Richtung
- U: Umfangsrichtung

## Patentansprüche

1. Reifenheizform zum Vulkanisieren eines Luftreifens, wobei der Luftreifen einen Laufstreifen mit Seitenflächen und einer Lauffläche aufweist, wobei die Reifenheizform Profilsegmente zum Ausprägen von radialen Vertiefungen im Laufstreifen und Seitenwandformen (1) aufweist, wobei zumindest an einer Seitenwandform (1) an einer den Luftreifen ausbildenden Fläche ein Bolzen (2) ausgebildet ist, der von der zumindest einen Seitenwandform (1) abragt, zum Ausprägen von im Wesentlichen parallel zur Lauffläche verlaufenden Vertiefungen in der Seitenfläche beim Einsetzen des Luftreifens in die Reifenheizform, **dadurch gekennzeichnet, dass** ein Querschnitt des Bolzens (2) eine elliptische, eine dreieckförmige oder eine wassertropfenförmige Geometrie aufweist.

2. Reifenheizform nach Anspruch 1, **dadurch gekennzeichnet, dass** der Bolzen (2) in die Seitenwandform (1), bevorzugt manuell, einlegbar ist, wobei der Bolzen (2) und die Seitenwandform (1) jeweils eine Kontaktfläche zum miteinander in mechanischen Kontakt treten aufweisen.

3. Reifenheizform nach den Ansprüchen 1 oder 2, **dadurch gekennzeichnet, dass** der Bolzen (2) an der Seitenwandform (1) dauerhaft gelagert ist, bevorzugt verfahrbar, insbesondere passiv verfahrbar.

4. Reifenheizform nach einem der vorangehenden Ansprüche, **dadurch gekennzeichnet, dass** der Bolzen (2) ein hochfestes Material aufweist, insbesondere eine Eisenlegierung oder eine Aluminiumlegierung.

5. Reifenheizform nach einem der vorangehenden Ansprüche, **dadurch gekennzeichnet, dass** der Bolzen (2) zumindest in Teilbereichen eine haftungsverringernde und/oder reibungsverringernde Beschichtung aufweist, insbesondere eine Polytetrafluorethylen-Beschichtung.

6. Reifenheizform nach einem der vorangehenden Ansprüche, **dadurch gekennzeichnet, dass** die Länge des Bolzens (2) über 10 %, bevorzugt über 20 %, weiter bevorzugt über 40 % und am meisten bevorzugt über 80 % der Höhe der Reifenheizform beträgt.

7. Reifenheizform nach einem der vorangehenden Ansprüche, **dadurch gekennzeichnet, dass** eine Mittelachse des Bolzens (2) bevorzugt eine Erstreckungskomponente in Umfangsrichtung U aufweist.

8. Reifenheizform nach einem der vorangehenden Ansprüche, **dadurch gekennzeichnet, dass** der Bolzen (2) entlang seiner Haupterstreckungsachse eine bogenförmige Geometrie und/oder eine konische Geometrie aufweist.

9. Heizpresse aufweisend ein Heizpressen-Oberteil und ein Heizpressen-Unterteil sowie einen Container, **dadurch gekennzeichnet**, der Container eine Reifenheizform nach einem der vorangehenden Ansprüche aufweist.

10. Verfahren zum Vulkanisieren eines Luftreifens mit einer Heizpresse nach Anspruch 9 mit den folgenden Schritten:
a) Beladen der geöffneten Heizpresse durch Einlegen eines zu vulkanisierenden Luftreifens, wobei durch die Bewegung des Luftreifens ein Teilbereich eines Bolzens (2) in einen Laufstreifen des Luftreifens eindringt,
b) Konformieren des Luftreifens und Zusammenfahren von Profilsegmenten in radialer Richtung R des Luftreifens,
c) Vulkanisieren des Luftreifens,
d) Öffnen der Heizpresse, Entladen des Luftreifens und Entfernen des Bolzens (2).

11. Luftreifen mit einem Laufstreifen aufweisend Seitenflächen und eine Lauffläche, wobei die Seitenflächen mit überwiegend konstantem Abstand zur Laufflächenoberfläche verlaufende Vertiefung aufweisen, hergestellt mit einem Verfahren nach Anspruch 10.

## Claims

1. Tyre heating mould for vulcanizing a pneumatic tyre, wherein the pneumatic tyre has a tread with lateral surfaces and a tread surface, wherein the tyre heating mould has profile segments for embossing radial depressions in the tread and side wall moulds (1), wherein a stud (2), which protrudes from the at least one side wall mould (1), for embossing depressions in the lateral surface running substantially parallel to the tread surface when inserting the pneumatic tyre into the tyre heating mould is formed on at least one side wall mould (1) on a surface forming the pneumatic tyre, **characterized in that** a cross section of the stud (2) has an elliptic, a triangular or a teardrop-shaped geometry.

2. Tyre heating mould according to Claim 1, **characterized in that** the stud (2) is insertable, preferably manually, into the side wall mould (1), wherein the stud (2) and the side wall mould (1) each have a contact surface for mechanically contacting one another.

3. Tyre heating mould according to Claims 1 and 2, **characterized in that** the stud (2) is permanently mounted preferably so as to be displaceable, in particular passively displaceable, on the side wall mould (1).

4. Tyre heating mould according to one of the preceding claims, **characterized in that** the stud (2) comprises a high-strength material, in particular an iron alloy or an aluminium alloy.

5. Tyre heating mould according to one of the preceding claims, **characterized in that** the stud (2) has an adhesion-reducing and/or friction-reducing coating, in particular a polytetrafluoroethylene coating, at least in sub-regions.

6. Tyre heating mould according to one of the preceding claims, **characterized in that** the length of the stud (2) is more than 10%, preferably more than 20%, more preferably more than 40% and most preferably more than 80% of the height of the tyre heating mould.

7. Tyre heating mould according to one of the preceding claims, **characterized in that** a central axis of the stud (2) preferably has a component of extent in the circumferential direction U.

8. Tyre heating mould according to one of the preceding claims, **characterized in that** the stud (2) along its main axis of extent has an arcuate geometry and/or a conical geometry.

9. Heating press comprising a heating press upper part and a heating press lower part and a container, **characterized in that** the container has a tyre heating mould according to one of the preceding claims.

10. Method for vulcanizing a pneumatic tyre with a heating press according to Claim 9, comprising the following steps:
a) loading the open heating press by inserting a pneumatic tyre to be vulcanized, wherein a sub-region of a stud (2) penetrates a tread of the pneumatic tyre due to the movement of the pneumatic tyre;
b) conforming the pneumatic tyre and converging profile segments in the radial direction R of the pneumatic tyre,
c) vulcanizing the pneumatic tyre,
d) opening the heating press, unloading the pneumatic tyre and removing the stud (2).

11. Pneumatic tyre with a tread having lateral surfaces and a tread surface, wherein the lateral surfaces have depression which runs at a largely constant spacing from the face of the tread surface, produced by a method according to Claim 10.

## Revendications

1. Moule chauffant pour pneus destiné à la vulcanisation d'un pneumatique, le pneumatique présentant une bande de roulement avec des surfaces latérales et une surface de roulement, le moule chauffant pour pneus présentant des segments de profil destinés à former des renfoncements radiaux dans la bande de roulement et des moules de parois latérales (1), un goujon (2) étant réalisé au moins sur un moule de paroi latérale (1) sur une surface réalisant le pneumatique, qui fait saillie de l'au moins un moule de paroi latérale (1) pour former des renfoncements s'étendant essentiellement parallèlement à la surface de roulement dans la surface latérale lors de l'introduction du pneumatique dans le moule chauffant pour pneus, **caractérisé en ce qu'**une section transversale du goujon (2) présente une géométrie elliptique, triangulaire ou en forme de goutte d'eau.

2. Moule chauffant pour pneus selon la revendication 1, **caractérisé en ce que** le goujon (2) peut être inséré dans le moule de paroi latérale (1), de préférence manuellement, le goujon (2) et le moule de paroi latérale (1) présentant chacun une surface de contact pour entrer en contact mécanique l'un avec l'autre.

3. Moule chauffant pour pneus selon les revendications 1 ou 2, **caractérisé en ce que** le goujon (2) est monté de manière permanente sur le moule de paroi latérale (1), de préférence de manière déplaçable, notamment de manière déplaçable passivement.

4. Moule chauffant pour pneus selon l'une quelconque des revendications précédentes, **caractérisé en ce que** le goujon (2) présente un matériau hautement résistant, notamment un alliage de fer ou un alliage d'aluminium.

5. Moule chauffant pour pneus selon l'une quelconque des revendications précédentes, **caractérisé en ce que** le goujon (2) présente, au moins dans des zones partielles, un revêtement réduisant l'adhérence et/ou réduisant le frottement, notamment un revêtement en polytétrafluoroéthylène.

6. Moule chauffant pour pneus selon l'une quelconque des revendications précédentes, **caractérisé en ce que** la longueur du goujon (2) est supérieure à 10 %, de préférence supérieure à 20 %, de manière davantage préférée supérieure à 40 % et de manière préférée entre toutes supérieure à 80 % de la hauteur du moule chauffant pour pneus.

7. Moule chauffant pour pneus selon l'une quelconque des revendications précédentes, **caractérisé en ce qu'**un axe central du goujon (2) présente de préférence une composante d'extension dans la direction circonférentielle U.

8. Moule chauffant pour pneus selon l'une quelconque des revendications précédentes, **caractérisé en ce que** le goujon (2) présente, le long de son axe d'extension principal, une géométrie arquée et/ou une géométrie conique.

9. Presse chauffante présentant une partie supérieure de presse chauffante et une partie inférieure de presse chauffante ainsi qu'un contenant, **caractérisée en ce que** le contenant présente un moule chauffant pour pneus selon l'une quelconque des revendications précédentes.

10. Procédé de vulcanisation d'un pneumatique à l'aide d'une presse chauffante selon la revendication 9, avec les étapes suivantes :
a) le chargement de la presse chauffante ouverte par insertion d'un pneumatique à vulcaniser, le mouvement du pneumatique entraînant la pénétration d'une zone partielle d'un goujon (2) dans une bande de roulement du pneumatique,
b) la conformation du pneumatique et le rapprochement de segments de profil dans la direction radiale R du pneumatique,
c) la vulcanisation du pneumatique,
d) l'ouverture de la presse chauffante, le déchargement du pneu et le retrait du goujon (2).

11. Pneumatique comportant une bande de roulement présentant des surfaces latérales et une surface de roulement, les surfaces latérales présentant un renfoncement s'étendant à une distance essentiellement constante de la surface de roulement, fabriqué par un procédé selon la revendication 10.
